# DEMANDE DE BREVET EUROPEEN

(11) **EP 0 778 192 A1**
(43) Date de publication de la demande: **11.06.1997**
(21) Numéro de dépôt: 96119282.0
(22) Date de dépôt: 02.12.1996
(51) Int. Cl.: B62B 1/18

(54) **Brouette**

(30) Priorité: 07.12.1995 FR 9514666
(71) Demandeur: MACC BATIMENT, F-86104 Chatellerault Cédex (FR)
(72) Inventeur: Merigot, Jean-Paul, 86104 Chatellerault Cédex (FR)

(57) **Abrégé**

Brouette composée d'un châssis (1), d'un bac (2) et d'une roue (3) dont la partie supérieure du châssis (4) en forme de berceau, reçoit et protège le bac (2), notamment sur trois côtés (avant et latéraux).

Le bac (2) renforcé sur le fond et en partie avant est supporté par un châssis (1) très rigide comportant des bras (5) et (5'), des pieds (8) et (8') faisant fourche de roue avec les renforts avants (9) et (9'), du bac (2) et des éléments de renforts de fond du bac (2) reliés entre eux (20, 21, 22).

## Description

De nombreux modèles de brouettes existent avec des dispositions particulières dont certaines ont fait l'objet des brevets décrits ci-dessous :
Brevet FR 9108994 - HAEMMERLIN - concerne une brouette dont le châssis est articulé sur la caisse pour permettre leur empilement pendant le transport et le stockage.
Brevet FR 9108993 - HAEMMERLIN - concerne l'articulation dans les paliers de la roue, le palier étant en matériau synthétique amortisseur.
Brevet FR 8302413 - RICHARD Pierre - a pour objet la fabrication d'une roue.
Brevet FR 8217477 - RICHARD Pierre - concerne les brancards et les pieds, la fourche de roue en une seule pièce.
Brevet FR 8016055 - RICHARD Pierre - concerne les brouettes démontables et notamment la fixation de la caisse à sa partie inférieure.
Brevet FR 7730736 - RICHARD Pierre - conditionnement de brouette pour le transport.
Brevet FR 8909222 - FRAISSE Patrick - concerne l'articulation d'une roue de brouette dans des berceaux portés par un arceau.
Brevet 2311701 - FR 7516370 - HAMEAU Serge - concerne une brouette à trois roues à brancards relevables.
Brevet FR 8800039 - RUAUX Jean-Claude - concerne un bac grand volume pour transport des matériaux légers.
Brevet FR 8704667 - CURANDEAU Bernard - concerne une brouette à suspension.
Brevet FR 8602214 - PORTALIER René - concerne un dispositif actionnant la roue au moyen d'une chaîne.
Brevet FR 8604955 - FARGUE Henri - concerne une brouette spéciale plante à brancards réversibles et équipée de fourches s'élevant au moyen d'un treuil.
Brevet FR 8514194 - DONZE Pierre et FRANCK Jean-Pierre - décrit une brouette à dispositif de roulage permettant d'équilibrer la charge.
Brevet FR 8418804 - CHANTEUX Henri - concerne un dispositif pour augmenter temporairement la capacité.
Brevet FR 8409475 - WEILL Marc-Emmanuel - décrit une brouette à deux roues alignées suivant l'axe de celle-ci.
Brevet FR 8410006 - ZAMMOUT Bernard - concerne des dispositions pour une brouette basculante.
Brevet FR 8405603 - BOISSY Marie-Jeanne et VINCENT Guy - décrit une brouette dont la roue est montée sur vilebrequin.
Brevet FR 8306791 - ZAMMOUT Bernard - concerne des dispositifs pour une brouette basculante.
Brevet FR 8309545 - MANSS August - concerne les patins de glissement d'une brouette autorisant le franchissement de marches.
Brevet français 8203919 - Gabriel De SMET, Claude RADET - concerne un châssis de brouette réalisé en pièces embouties.
Brevet FR 8204570 - FRAISSE Marthe - concerne un piétement particulier démontable et gerbable de brouette. Cette disposition facilitant le transport.
Brevet FR 8111015 - KLEINDIENST André - concerne un appareil de manutention type brouette dont les principales parties : brancards, bac, plateaux peuvent être associés rapidement et sont interchangeables.
Brevet FR 8102199 - Hors LANGENSCHEIDT et Hans Joachim BRANDEBURG - concerne une brouette dont le bac est indépendant et peut être pris en charge sur le châssis au moyen de dispositions particulières.
Brevet FR 8016055 - RICHARD Pierre - décrit une brouette dont la caisse est fixée par le dessous et sa partie arrière.
Brevet FR 7908139 - OMET DI PISCOPELLO PIERO - concerne la forme d'un coffre dans lequel s'encastre le cadre.
Brevet FR 7823201 - HAEMMERLIN S.A - concerne un perfectionnement aux brouettes et notamment aux caisses dont le pourtour est équipé d'une bande de protection.
Brevet FR 7423205 - STASSE Roland - concerne les brouettes pelleteuses.
Brevet FR 724443 - Michel MARTHE - décrit un châssis berceau pouvant s'empiler.
Brevet FR 7132642 - Georges DAVID - décrit une brouette plastique dont les éléments de brancards et de pieds sont fixés sur le côté de la cuve.
Brevet FR 1430572 - J.A.P. MARGAGE - concerne une brouette basculante dont l'emplacement de l'essieu est variable sur le châssis.
Brevet FR 1313595 - Georges HAEMMERLIN - décrit un châssis tubulaire démontable.
Brevet FR 1305786 - RENK - décrit une brouette à deux roues équipée soit d'une benne basculante ou d'un plateau.
Brevet FR 1281947 - BILHERAN - concerne une brouette à suspension.
Brevet FR 1262871 - GINEFRI - concerne une brouette à roue centrale et caisse basculante.
Brevet FR 1200523 - KASTNER - décrit une brouette à roues jumelées et roues pivotantes.
Brevet FR 1243200 - GUILLAUMOU - décrit une brouette métallique dont la benne est découpée dans un seul morceau de tôle.

Les inventions concernant les brouettes et, plus précisément, les plus récentes, se sont attachées à résoudre des problèmes de fabrication, de transport et de coût occultant les vrais problèmes d'utilisation donc de besoin et, également, d'ergonomie.

Les brouettes actuelles ont, dans leur grande majorité, le bac fixé par le fond au moyen de quatre boulons sur un châssis passant donc sous le bac. Le chargement supporté dans le bac, dalles parpaings, graviers, ciment, béton, sollicite alors ce même bac en torsion, flexion et l'alternance des sollicitations générées lors du roulage a pour effet de cisailler la tôle du fond de bac au niveau des fixations.

D'autre part, les bords du bac, même renforcés par des bords emboutis et roulés pour être doublés en épaisseur sont, après quelque temps d'usage, détériorés par déformations ou coupés.

Ce bord de bac ne permet pas de prendre appui pour verser latéralement le contenu de la brouette et supporte mal les chocs dus aux outils (pelle) ou aux matériaux (parpaings, moellons, pierre). C'est, sans doute, cette fragilité et la volonté de baisser les coûts de fabrication et de transport qui ont entraîné les constructeurs actuels à réaliser les ensembles : brancards, pieds, fourche de roue en une ou deux parties ; la fourche de roue se trouvant maintenue alors en écartement par un arceau. A cet arceau a été attribuée la fonction de déversement avant mais cette forme s'avère très gênante, voire dangereuse, lors de roulage dans les terrains accidentés et, notamment, en pente frontale ou pour passer des obstacles type marches, bordures de trottoirs.

La présente invention a pour but de remédier, entre autres, aux défauts évoqués, ci-dessus, et d'améliorer très sensiblement la rigidité de la brouette et donc d'en assurer une longévité accrue et une manipulation plus confortable.

A cette fin, il a été conçu un châssis très rigide et monobloc où les fonctions brancards, pieds, fourche de roue, support et renfort de bac sont réalisées et assurées de manière rigide et solide. Le bac n'est plus fixé par le fond mais en partie supérieure sur le bord renforcé et roulé sur une armature tubulaire bordant le bac sur trois côtés.

Le bac est donc repris par une de ses zones renforcées et se trouve encastré dans le châssis, ce qui élimine toutes déformations en torsion flexion et donne une grande résistance aux chocs, aux coups, par la présence de cette armature tubulaire autour du bac.

L'agressivité du bord de tôle des bacs actuels sur l'environnement de circulation (mur, brique, plâtre) et également sur les opérateurs, se trouve éliminée par ces dispositions.

Ce châssis comporte les bras brancards qui sont réalisés par les parties prolongeant l'armature. Deux pieds viennent se reprendre solidement sur cette armature à la naissance des brancards et sont maintenus écartés rigidement par un arceau puis, se rapprochent vers l'avant pour réaliser la fourche de roue ; fourche qui se trouve renforcée par deux jambes de force reliant la partie avant de l'armature à ce nez de fourche. Une bande de tôle solidaire du châssis tubulaire reliant en partie centrale et avant l'armature du bac, les jambes de force, les pieds et l'arceau d'écartement de ces mêmes pieds. Cette tôle a la même forme que le fond de bac et vient donc doubler en partie centrale ce fond et offrir une plus grande résistance aux chocs et déformations.

Le bac de la brouette vient donc se poser dans cette armature que constitue le châssis et se trouve supporté et protégé en son pourtour et soutenu par le fond.

La fourche reçoit une roue articulée autour d'un axe rendu solidaire de cette même fourche par deux boulons.
La figure 1 représente la brouette vue de côté
La figure 2 représente la brouette en vue arrière côté brancards
La figure 3 représente en vue avant la brouette, c'est-à-dire, côté roue
La figure 4 représente la brouette vue de dessous

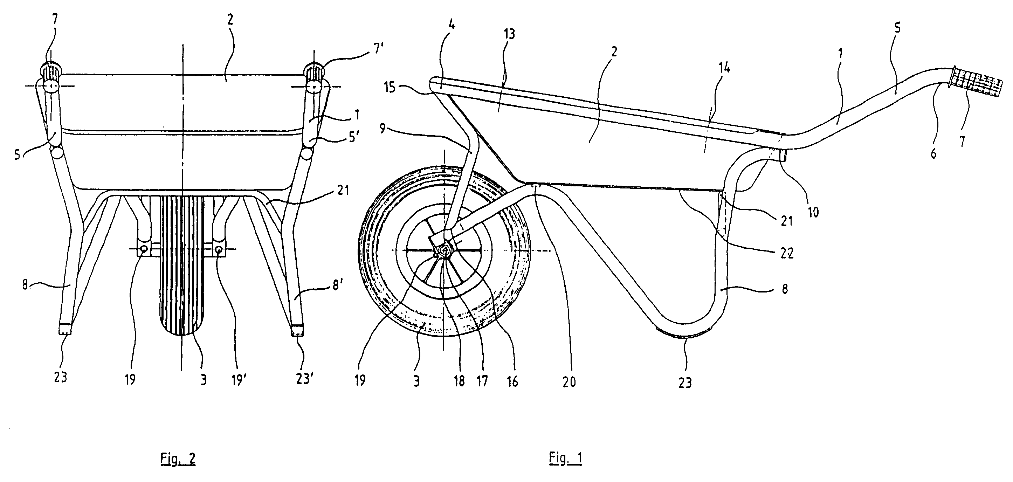

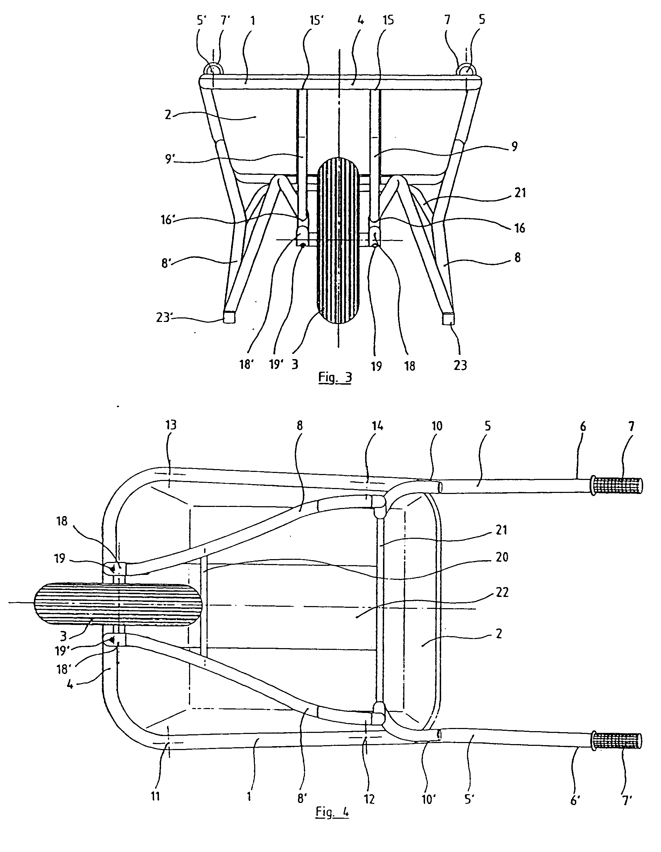

Selon les figures 1, 2, 3 et 4, la brouette objet de la présente invention est composée de trois grandes parties principales : le châssis (1), le bac (2), la roue (3).

Toujours selon les figures 1, 2, 3 et 4, le châssis (1) se compose d'une armature (4) de bac (2) sur laquelle est fixé en quatre points (11) (12) (13) et (14) ce même bac (2). Le rebord supérieur roulé et renforcé du bac (2) encastré sur l'armature (4) est solidaire de ladite armature (4) au moyen de quatre vis, ce qui a pour effet d'obtenir une surface dépourvue d'aspérités sur le fond du bac (2).

Suivant la figure 4, l'armature (4) borde le bac (2) sur trois côtés ; cette armature (4), en se prolongeant sur deux côtés, réalise les bras (5) et (5').

Selon les figures 1, 2 et 3, ces bras (5) et (5') sont relevés puis cintrés vers le bas dans la partie de préhension (6) et (6'); formes qui ont pour but de favoriser le maintien dans la main de l'utilisateur et d'éviter de lui échapper. Ces parties sont équipées de poignées (7) et (7'). Les poignées de préhension terminant les bras (5) et (5') sont inclinées vers le bas de façon à se trouver sur un plan horizontal lorsque l'utilisateur soulève et roue la brouette.

Les figures 1, 3 et 4 montrent que le châssis (1) est composé de l'armature (4) sur laquelle sont solidaires rigidement des pieds (8) et (8') en (10) et (10') et les renforts (9) et (9') en (15) et (15'). Les pieds (8) et (8') et les renforts (9) et (9') convergent vers l'avant de la brouette pour se réunir rigidement en (16) et (16') pour former la fourche recevant la roue (3). Cette roue (3) tournant autour d'un axe (17) rendu solidaire des paliers (18) et (18') par des boulons (19) et (19').

Toujours selon les figures 1, 3 et 4, les pieds (8) et (8') en se rapprochant vers l'avant pour former la fourche passent sous le bac (2) où ils sont réunis par un plat (20).

Côté brancards, ces pieds (8) et (8') sont reliés rigidement par un arceau (21). Cet arceau (21) situé, également, sous le bac (2) supporté et est solidaire d'une bande de tôle de renfort (22).

Cette bande (22) solidaire donc de l'arceau (21), puis du plat (20) et des renforts (9) et (9') épouse en partie médiane le fond et l'avant du bac (2) pour lui assurer un renforcement aux chocs de pierre, moellons, lors du chargement. Cette bande (22), l'arceau (21), le plat (20) et les renforts (9) et (9') reliant rigidement les pieds (8) et (8') à l'armature (4), constituent ainsi un châssis (1) très rigide dans lequel vient s'encastrer pour être supporté et protégé, un bac (2).

Suivant les vues 1, 2, 3 et 4, les pieds (8) et (8') sont renforcés dans la partie en contact avec le sol de plats (23) et (23').

## Revendications

1. Brouette composé d'un châssis (1), d'un bac (2) et d'une roue (3) caractérisée en ce que le bac (2) est posé et encastré sur le châssis (1) composé en sa partie supérieure d'une armature (4) prolongée des deux bras de préhension (5) et (5'), sur laquelle vient s'encastrer, sur trois de ses côtés, le rebord supérieur roulé et renforcé du bac (2) et en ce que l'armature (4) est solidaire des renforts (9) et (9') et des pieds (8) et (8') accouplés sous le bac (2) dans la partie avant de la brouette, au moyen d'un plat (20) et dans la partie arrière au moyen d'un arceau (21) conférant à l'ensemble châssis (1) une grande rigidité, et en ce que une bande de tôle (22) solidaire des renforts (9) et (9') du plat (20) de l'arceau (21) et de l'armature (4) dans sa partie avant, épouse la forme du bac (2) sur le fond et sa partie avant, de façon à rechercher à la fois une rigidité maximale de l'ensemble et une protection supplémentaire du bac (2).

2. Brouette suivant la revendication 1 caractérisée en ce que le rebord supérieur roulé et renforcé du bac (2) encastré sur l'armature (4) est solidaire de ladite armature au moyen de quatre vis (11) (12) (13) et (14), ce qui a pour effet d'obtenir une surface lisse dépourvue d'aspéritiés sur le fond du bac (2).

3. Brouette suivant la revendication 1 caractérisée en ce que les poignées de préhension (7) et (7') terminant les bras (5) et (5') sont inclinées vers le bas de façon à se trouver sur un plan horizontal lorsque l'utilisateur soulève et roule la brouette et éviter ainsi le risque de glissement des mains.
